# EUROPEAN PATENT APPLICATION

(11) **EP 3 115 810 A1**
(43) Date of publication of application: **11.01.2017**
(21) Application number: 15175560.0
(22) Date of filing: 06.07.2015
(51) Int. Cl.: G01V 5/00

(54) **A METHOD OF SECURITY SCANNING OF CARRY-ON ITEMS, AND A SECURITY SCANNING SYSTEM OF CARRY-ON ITEMS**

(71) Applicant: Danmarks Tekniske Universitet (DTU), 2800 Lyngby (DK)
(72) Inventor: POULSEN, Henning Friis, 4000 Roskilde (DK); OLSEN, Ulrik Lund, 2880 Bagsværd (DK)
(74) Representative: Awapatent A/S

(57) **Abstract**

A security scanning system (1) comprises a first stage module (3) having at least one X-ray source (6) and at least three first detectors (7) that are line-shaped and arranged in mutually different orientations and have at least dual energy resolution. A group of carry-on items (4) on a carrier are scanned simultaneously in the first stage module solely by transmission contrast radiography generating projections of two-dimensional image data. A processing device (9) reconstructs a 3D representation of the carry-on items and analyzes the 3D representation to determine whether further scanning is required.

## Description

The present invention relates to a method of security scanning of carry-on items, comprising at least the following steps: a) receiving carry-on items, b) scanning the carry-on items in a first stage module using at least one X-ray source and first detectors to conduct transmission contrast radiography generating projections of two-dimensional image data of the carry-on items, c) reconstructing a three-dimensional representation of the carry-on items, d) analyzing the three-dimensional representation to determine whether further scanning is required, e) carry-on items determined in step d) to require further scanning are scanned in a second stage module using at least one X-ray source and at least one second detector.

A method of this kind is described in WO 03/065077 where the carry-on items are scanned one after the other. The scanning is thus performed on a single carry-on item, and the carry-on items disclosed are all carry-on luggage, viz. hand luggage, having well-defined outer side walls. The individual carry-on item is scanned in the first stage module, and if the analysis determines that the contents are without contraband items, then a diverter device may direct the carry-on item to a discharge path. If the carry-on item is not diverted it continues to further scanning in the second stage module. The scanning in the first stage module is a CT scanning involving a ring-shaped detector, and the X-ray source rotates in ring around the carry-on item at considerable speed, and the scanning of the carry-on item involves generating at least 1000 projections of 2D image data, and the reconstruction of the 3D representation can be performed with accuracy due to the high number of 2D projections.

CT scanning has a disadvantage in that the first stage module is very large and heavy due to the rotating mechanism used for the scanning. A CT scanner is typically located on the ground floor or in a basement where solid foundation is available, and the CT scanner also requires heavy shielding in order not to be a health risk to people.

Scanning of carry-on items is different from scanning checked-in luggage. Checked-in luggage can be scanned at remote location because the luggage items are transported in their own flow and along their own transport path, without any physical proximity to the person to whom the luggage item belongs. Scanning of checked-in luggage may thus be performed at a location suitable for the scanning equipment, and it does not so much matter if the scanning equipment is large and heavy. Scanning of checked-in luggage can be performed at any convenient time between checking-in of the luggage item and delivery of the scanned luggage, such as at an airplane before it departs. There will typically be at least 20 minutes available for routing the luggage item and for the scanning, sometimes even about an hour.

Carry-on items follow the person to whom the carry-on items belong, because the person transports the carry-on items along the path of the person. When security checking is to be performed, the person is temporarily delivering the carry-on items to the checking facility, and the person waits until the checking of the carry-on items is completed, and then the person receives the carry-on items and may continue onwards together with the carry-on items. The security scanning of carry-on items is thus preferably to be performed immediately when the person delivers the carry-on items for the security check, and it is to be performed in vicinity of the person.

For personal safety reasons the CT scanning described in WO 03/065077 requires that the equipment is distant from the person to whom the carry-on item belongs, and although this may find a solution where the scanning equipment is located at a floor below where the person is delivering and receiving the carry-on item, such a solution requires space.

Scanning of carry-on items has for years been performed without the step of reconstructing the 3D representation of the carry-on items. An example of this is given in US 5,600,303 where receiving carry-on items are received and scanning in a first stage module using at least one X-ray source and first detectors to conduct transmission contrast radiography generating a projection of two-dimensional 2D image data of the carry-on items. The 2D image can be enhanced, such as by edge sharpening and contrast enhancement, and be analyzed by computer for possible threats, and then an operator views the enhanced 2D image and determines further scanning is required, and if required, the carry-on item is scanned in a second stage module using at least one X-ray source and at least one second detector. The first stage module can be of small and simple construction, and it may be properly shielded without any great difficulty. But an operator is required to view the 2D image.

In WO 2006/074431 it is suggested to keep carry-on items on the cart used to transport them and pass the cart with the carry-on items through an X-ray scanning system. There is only a single stage module, and the detectors in this module may be L-shaped or planar. The captured 2D images are analyzed by a processing unit for threats, and if no threat is found after the scanning in the single stage module, the cart is cleared and returned to the person to whom the carry-on items belong. However, if a potential threat is found, then the image is sent to a workstation where security personnel can view the image and make a determination of whether the articles in the cart need to be hand searched.

It is an object of the present invention to improve the security scanning of carry-on items.

With a view to this, in the initially mentioned method of security scanning of carry-on items according to the present invention, the carry-on items in step a) are received as a group of carry-on items on a carrier and are scanned simultaneously as a group in step b), and at least three of the detectors used in step b) to conduct transmission contrast radiography are line-shaped and provide at least dual energy resolution, wherein said at least three of the first detectors detect at least three projections of two-dimensional image data and have mutually different orientations.

The carry-on items are received as a group on a carrier and are scanned simultaneously as a group, and this simplifies the handling of carry-on items and the scanning, as it is avoided to separate the individual carry-on items and avoided to pass them one after another trough scanning as individual objects scanned one by one. It is an improvement in handling and faster scanning is achieved by simultaneously scanning a group of carry-on items on a carrier.

The reconstruction of the three-dimensional representation of the carry-on items is facilitated by using at least three line-shaped first detectors, each generating projections of two-dimensional image data of the carry-on items. The projections of two-dimensional image data of the carry-on items obtained by the at least three line-shaped first detectors compensate in the process of reconstruction for the complexity caused by the simultaneously scanning of the group of carry-on items on the carrier. The reconstruction of the three-dimensional representation of the carry-on items allows computerized analysis of whether further scanning is required, and there is consequently less need, or no need for an operator to make a human determination of possible threats in the carry-on items based on the results of scanning in the first stage module.

The at least dual energy resolution of the individual first detector facilitates the analyzing of the three-dimensional representation in order to determine whether further scanning is required. The energy resolution provides additional information as to the nature of the materials in the carry-on items and allows improved separation into individual carry-on items in the group of carry-on items on the carrier. In an embodiment, the individual first detector has multi-energy resolution, such as an energy resolution in the range from 8 to 256 energy levels, suitably at least 64 energy levels, such as 128 energy levels. The signal acquisition may occur with a higher number of channels, the signals from which are binned to fewer energy levels as mentioned in order to reduce noise.

By employing at least three line-shaped first detectors in the first stage module, the first stage module is designed and operates in a manner that allows installation in an area where the persons carrying or transporting the carry-on items passes, because the shielding required in order to obtain adequate personal safety against X-ray radiation is easy to establish, and because the first stage module has outer dimensions of relatively small size, and the first stage module has a weight allowing installation in ordinary building structures.

The at least three line-shaped first detectors each detect a projection of two-dimensional image data of the carry-on items and the at least three projections of two-dimensional image data have mutually different orientations in space and they are each detected with an energy resolution of at least two levels. Examples of carry-on items are handbags, briefcases, a travel bag, a shopping bag, a coat, a jacket, a scarf, a jersey, a computer bag, purses, key rings, and phones. Each item appears in at least three projections of the two-dimensional image data, which projections have mutually different orientations and energy resolution is available for the at least three mutually different orientations. The reconstruction of the three-dimensional representation of the carry-on items allows determination of not only content items within a single piece of carry-on item, but also determination of the individual carry-on items in the group of carry-on items on the carrier.

The X-ray source and first detectors may be mounted in a fixed structure so that their mutual positioning is fixed, but the fixed structure being movable, such as sideways or in the direction of height in order to make room for a carrier with a over-sized carry-on item or in order to perform scanning of a group of carry-on items, however, preferably the at least one X-ray source and first detectors are stationary during scanning in step b). The first stage module has more simple structure and design when the at least one X-ray source and first detectors remain stationary.

Preferably the scanning in step b) generates from 3 to 30 projections of two-dimensional image data of the carry-on items. It is possible to maintain the group of carry-on items on the carrier in stationary position within the first stage module, and then perform the scanning in a sequential manner and position the at least one X-ray source and a first detector in a predetermined position for the individual scan and shift the at least one X-ray source and the first detector between the predetermined positions. However, this will prolong the scanning procedure. It is consequently preferred that the first stage module has one structurally fixedly mounted first detector for each of the projections to be generated during scanning so that all scans are performed simultaneously. This also allows the group of carry-on items on the carrier to be movable through the first stage module during the scanning. It is even more preferred that the scanning in step b) generates from 3 to 20 projections of two-dimensional image data of the carry-on items, as this reduces the number of first detector to a maximum of 20. A further reduction in the number of first detector is obtained in a suitable configuration where the scanning in step b) generates from 3 to 9 projections of two-dimensional image data of the carry-on items.

In a preferred example the reconstruction of the three-dimensional representation in step c) uses external information in addition to the two-dimensional image data from the at least 3 projections of the carry-on items. As an example, the external information may be a stored library of characteristics of typical carry-on items, as handbags, briefcases, travel bags, shopping bags, coats, jackets, a scarf, jerseys, computer bags, purses, key rings, and phones have typical sizes, typical shapes, and are of typical materials.

Preferably, the external information is selected as one or more from a group comprising i-a) information on the outer shape of carry-on items in the group of carry-on items; i-b) real materials provide positive attenuation and no generation of X-rays in the material; i-c) an individual object in a carry-on item, or the carry-on item itself, has the same density; i-d) segmentation of the projections of two-dimensional image data provide information on boundaries between areas of different materials. Other types of external information are also possible, such as personal information pertaining to the person or persons to whom the group of carry-on items belong. If the person is male, a carry-on bag is typically of a different type than if the person is female. If a person travels for business purpose, the carry-on items have typically a different composition than when the person is a leisure traveller. In case the security scanning is at an airport the range of carry-on items will have a larger variety of types than when the security scanning is at a concert hall or at a courthouse. The stored library of characteristics of typical carry-on items can be adapted to the particular setting for the security scanning.

Preferably, the analyzing in step d) involves categorization of voxels in the three-dimensional representation into one of known restricted materials, known safe materials, or unknown materials, and said categorization of voxels is furthermore associated with an estimate of accuracy. This preferred manner of categorization allows for more speedily processing of the data. However, it is alternatively possible to categorize into only restricted materials, but then a larger proportion of the groups of carry-on items will be determined as requiring further scanning, and this will make the overall security scanning process more time-consuming.

In a further optional development based on the categorization, step d) determines that further scanning is required if an estimate of accuracy for a voxel categorized as a known restricted material or as a known safe material is below a first pre-defined threshold. When the estimate of accuracy is above the pre-determined threshold value, then the voxel category is taken as a definite categorization and the particular group of carry-on items is deemed to hold a threat if the category is a known restricted material. If all voxels in the particular group of carry-on items are categorized as above the threshold value and as known safe materials, then the particular group of carry-on items is accepted as safe and the carrier is shifted to a release station without being scanned in the second stage module.

In yet a further optional development based on the categorization, step d) determines that further scanning is required if an estimate of accuracy for a voxel categorized as an unknown material is below a second pre-defined threshold, the second pre-defined threshold being higher than the first pre-defined threshold. Unknown materials are assumed to be safe, but the categorization as unknown material has preferably been set to require a higher accuracy in order to be classified as unknown material. If the classification as unknown material is associated with an estimated accuracy below the second pre-defined threshold, then it is preferred that the particular group of carry-on items is directed to further scanning in the second detector in order to resolve the uncertainty in the determination of the category of the voxel. As an alternative, any voxel being candidate to categorization as unknown material is determined to require further scanning in the second stage module.

Preferably, the groups of carry-on items determined in step d) to require further scanning are in average over a week of operation at the most 10 percent of all groups of carry-on items scanned during the week. The further scanning is time-consuming and the efficiency of the security scanning is high when at least 90 percent of all groups of carry-on items scanned are either determined to include a threat or to not include a threat solely by the scanning in the first stage module and the subsequent reconstruction and analyzing. The scanning in the second stage module will for a large proportion of the groups requiring further scanning determine with high accuracy whether the individual group of carry-on items actually includes a threat or actually does not include a threat, and consequently only very few groups of carry-on items require a subsequent manual inspection by security personnel. A lower level of determination without scanning in the second stage module is also possible, but less preferable, such as the groups of carry-on items determined in step d) to require further scanning are in average over a week of operation at the most 20 percent of all groups of carry-on items scanned during the week.

It is an advantage of the security scanning method according to the present invention that it can determine with a high degree of certainty whether a group of carry-on items contains a threat or not, and that this determination can be done without manual inspection of the group of carry-on items.

Preferably, the carrier of the individual group of carry-on items is a cart used by a person to transport the person's personal group of carry-on items. This makes the security scanning of the group of carry-on items very simple, because the person does not need to unload the carry-on items onto a special carrier used only for security scanning purposes, but may simply pass the cart used to transport the carry-on items to the security scanning location through the security scanning, possibly after having placed additional carry-on items onto the cart, such as key rings, a phone or a piece of garment, in order to simplify personal scanning in a separate procedure for such scanning. When the cart has been scanned and accepted as holding no threat, it is simply released to the person, and the person can immediately continue in the travel path desired without having to remove the carry-on items from the carrier used during the security scanning. However, it is also possible to use a carrier that is dedicated for security scanning, and then the carry-on items need to be loaded onto the carrier before scanning and to be removed from the carrier after completed scanning.

Preferably, the group of carry-on items on the carrier may include content items holding liquid amounts in the range of 0.13 l to 3 l. It is currently a requirement at many security scanning locations, such as at airports that content items have to be removed from the carry-on item if the content item fulfils certain criteria, such as a liquid amount on excess of 0.1 l. Many bottles hold more than 100 ml of liquid, and it is thus cumbersome to travelling persons that current security scanning systems cannot determine that for instance a bottle of water is actually a bottle of water an pose no security threat. The method of security scanning according to the present invention is capable of making the determination whether a liquid is a threat or not. This determination is performed on small volumes, called voxels, and these volumes are much smaller than a volume holding 100 ml. The method of security scanning according to the present invention is consequently capable of determining whether a liquid is a threat or not irrespective of whether the item holding the liquid is larger than 100 ml or smaller than 100 ml. When the method of security scanning is capable of determining whether a content item holding liquid amounts in the range of 0.13 l to 3 l is a threat or not, then the method can determine whether a content item holding liquid is a threat, also when the liquid amount in the content item is lower than 130 ml or higher than 3000 ml. To the persons carrying the groups of carry-on items, it will be a relief not to have to take out singular content items from a carry-on item, just because it contains liquid in an amount over 100 ml.

In another aspect, the preset invention relates to a security scanning system of carry-on items, comprising an inlet station for carry-on items, a first stage module having at least one X-ray source and first detectors for conducting transmission contrast radiography generating projections of two-dimensional image data of the carry-on items, at least one processing unit operationally connected to said first detectors, said at least one processing unit being configured to reconstruct a three-dimensional representation of the carry-on items and to analyze the three-dimensional representation to determine whether further scanning is required, a second stage module having at least one X-ray source and at least one second detector for scanning the carry-on items requiring further scanning, wherein the inlet station for the carry-on items is configured to receive a group of carry-on items on a carrier, and the first stage module is configured to simultaneously scan the group of carry-on items on the carrier, and wherein at least three first detectors in the first stage module are line-shaped and arranged in mutually different orientations and have at least dual energy resolution. The effects and advantages explained in the above in relation to the method according to the first aspect of the present invention also apply to the aspect of the security scanning system.

The first stage module is preferably only performing transmission contrast scanning.

In an embodiment according to the present invention the first detectors in the first stage module are line-shaped detectors of a length of at least 1 metre. It is possible to use detectors of shorter length, but a length of at least 100 cm makes it possible for the detector to obtain a projection of two-dimensional image data that extends across the entire individual group of carry-on items on the carrier.

In an embodiment the first stage module has in the range of from 3 to 30 line-shaped detectors arranged in at least three different directions.

In an embodiment the carrier is a cart for use by a person to transport the person's personal group of carry-on items.

In the following, illustrative examples and embodiments of the present invention are described in further detail with reference to the schematic drawings, on which
Fig. 1 illustrates a security scanning system according to the present invention,
Fig. 2 illustrates a first stage module in the system of Fig. 1,
Fig. 3 illustrates an embodiment of a line-shaped first detector,
Fig. 4 illustrates an embodiment of a cart with a group of carry-on items, and
Fig. 5 illustrates a second stage module in the system of Fig. 1.

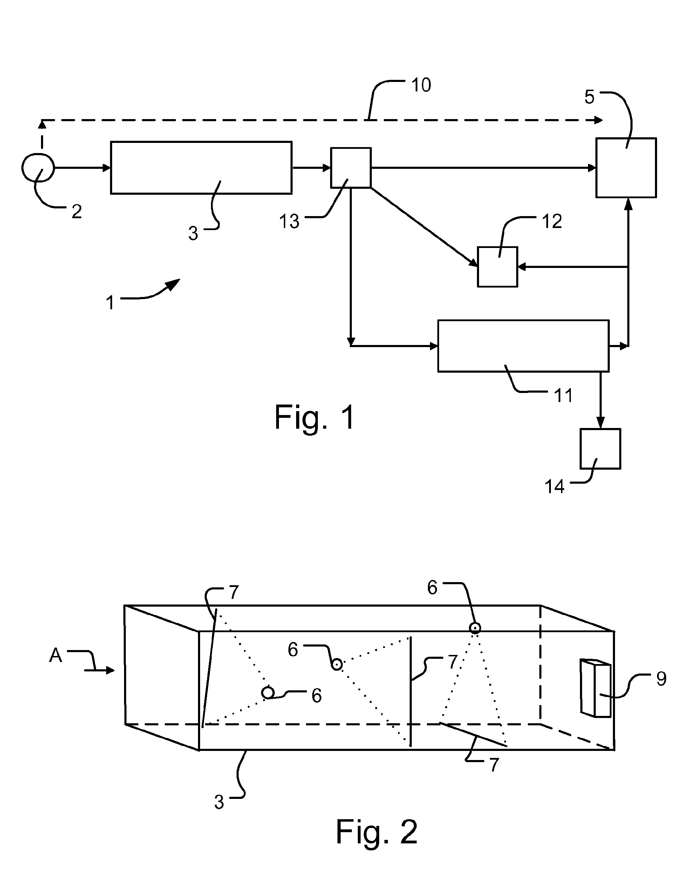

An embodiment of a security scanning system for scanning of carry-on items is generally denoted 1 in Fig. 1. The security scanning system has an inlet station 2 for carry-on items located at the end of a first stage module 3. A person arriving at the security scanning system in order to be security scanned delivers the carry-on items at the inlet station. In case the security scanning system is located at a facility where the person is carrying the carry-on items, the security scanning system may have carriers for receiving the carry-on items at inlet station 2. In this case, the person places the carry-on items on the carrier as a group 4 of carry-on items. In case the security scanning system is located at a facility, like an airport, where carts are provided for transporting carry-on items within the facility, the cart with the group of carry-on items is simply delivered at the inlet station 2. The person then walks to a release station 5 along a path 10 as indicated by the broken line, and on the way the person may pass a scanning station for scanning persons.

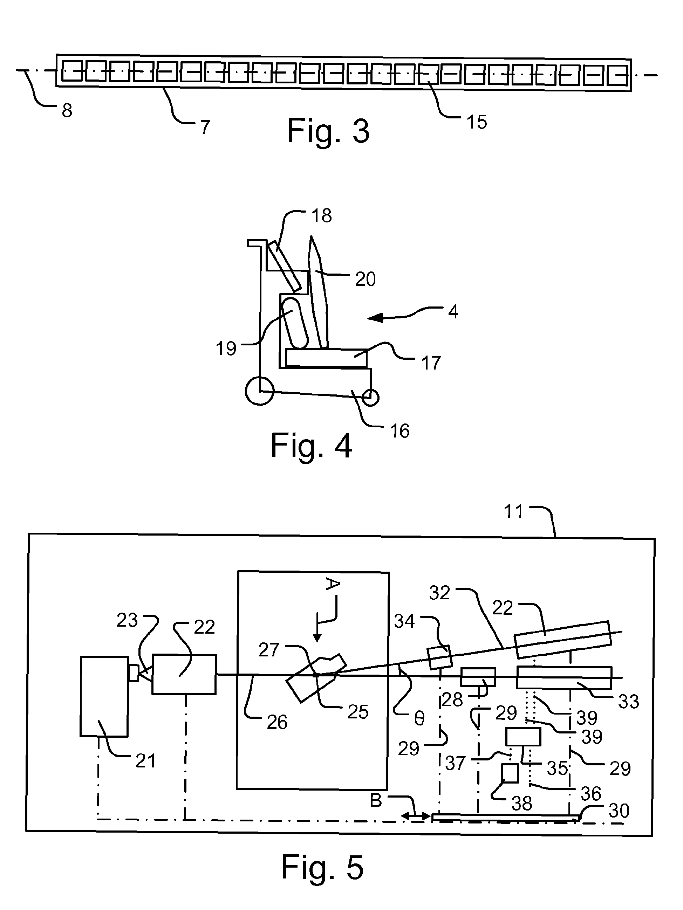

The first stage module 3 has at least one X-ray source 6 and at least three first detectors 7 for conducting transmission contrast radiography. The individual first detector is line-shaped along a longitudinal axis 8 (cf. Fig. 3). The X-ray source 6 is located to emit an X-ray beam from one side of a scanning volume in the first stage module towards an associated line-shaped first detector located at the opposite side of the scanning volume. When a group of carry-on items on the one hand and X-ray source and associated first detector on the other hand are moved in relation to one another, and the X-ray beam illuminates the group of carry-on items and passes on to the first detector, then the image data detected by the first detector are sampled with a frequency that permits acquisition of a complete two-dimensional image of the group of carry-on items. The sampling frequency is preferably so that from one sampling to the next the group of carry-on items has shifted a distance corresponding to the width of the first detector in the direction of movement. The sampling frequency may also be higher, and then the image data handling may make adjustment to take into account that the same position within the group of carry-on items has been sampled more than once by the same first detector.

The at least three first detectors 7 have their longitudinal axes 8 oriented in mutually different orientations in space. The image data detected by one of the first detectors will consequently represent a slice through the group of carry-on items in a direction that is different from the corresponding directions of the at least two other first detectors. The at least three first detectors will thus provide at least three image data of every position within the group of carry-on items. The image data represent the attenuation of the X-rays during passing through the group of carry-on items. In most cases the individual items in the group overlap in the direction of the x-ray beam, and the resulting attenuation is caused by attenuation in the various overlapping materials. However, as the first detectors are oriented in mutually different orientations, the image data analysis can determine the type of material in a particular volume within the group of carry-on items.

The X-ray source 6 emits the X-ray beam from a beam opening. The beam opening is in one embodiment shaped to emit the X-ray beam as a fan shaped beam with such a large opening angle that the fan beam illuminates completely the group of carry-on items in the direction given by the orientation of the associated line-shaped first detector and the location of the source and this first detector. The X-ray source may also be arranged as an array of beam openings so that the resulting beam is sheet-like. In an embodiment the first stage module has a single X-ray source that supplies a plurality of beam opening. In another embodiment the first stage module has several X-ray sources, such as one X-ray source for each first detector.

In Fig. 2 three first detectors 6 are arranged. At the right hand side one first detector is located below the scanning volume and oriented with the longitudinal axis in horizontal direction and about perpendicular to a direction of travel A, and with the associated beam opening of the X-ray source 6 located above the scanning volume. A second of the three first detectors is located to one side of the scanning volume and extends in the vertical direction, and the beam opening of the associated X-ray source 6 located to the opposite side of the scanning volume. A third of the three first detectors is located at the side of the scanning volume and extends in an oblique direction, and the beam opening of the associated X-ray source 6 is located at the opposite side of the scanning volume. In another embodiment there are more than three first detectors and associated beam openings, such as 9 first detectors.

The first detectors are operationally connected with at least one processing unit in a processing device 9 that reconstruct a 3D (three-dimensional) representation of the scanned group of carry-on items based on the sampled 2D (two-dimensional) projections. At each sampling a 2D projection containing image data is obtained from each of the first detectors. The geometry of the first detectors and X-ray sources are known and stored in the processing device together with algorithms used to reconstruct the 3D representation.

The 3D representation is divided into voxels. A voxel is a volume of predefined length, height and width, and image data from each detector are associated with the voxels. For a particular voxel the association can be illustrated by imagining a straight line from the X-ray source through the voxel to a point on the associated first detector, and the image data sampled at this point on the first detector is associated with the voxel. There will be as many such lines as there are first detectors, so the individual voxel is associated with a set of image data holding information on the X-ray attenuation in the directions of the lines.

The processing device may include a library of characteristic content items of carry-on type, and for each content item there can be information of typical materials, and optionally also of typical shapes and typical sizes. A book is of particular materials and has typical sizes and characteristics, different from a pair of socks. The number of unique types of carry-on items is not that large. A library of e.g. 1000 different types will cover almost any content item in an actual carry-on item. A library of 100 different materials or 500 different types will cover a large percentage of all carry-on items in e.g. an airport. The library may also have entries for characteristic items of carry-on type, such as an umbrella, a bag, a purse, etc.

The processing device may include a library of characteristic materials in carry-on items. These materials are known safe materials. A library of e.g. 1000 different types of materials cover almost any content item in an actual carry-on item, and a library of 100 different materials, or 300 different materials, will cover a large percentage of all materials in carry-on items in e.g. an airport. Each entry of a material in the library is associated with data for X-ray attenuation in the material, and this attenuation includes at least two values representing attenuation at different energy levels for the X-rays.

The processing device may include a library of characteristic restricted materials, such as explosives, poisons, highly toxic materials, highly flammable materials etc. These materials are known restricted materials. A library of e.g. 1000 or 500 different types of restricted materials provide high reliability of detection of any restricted material. A library of 100 or 300 different materials will assist in covering a large percentage of all materials in carry-on items in e.g. an airport. Each entry of a material in the library is associated with data for X-ray attenuation in the material, and this attenuation includes at least two values representing attenuation at different energy levels of the X-rays.

The first detectors 7 are energy resolvable detectors, and may detect at least two values at the same time, where the individual value is associated with an energy level or energy range of the detected photon. This may assist in determining the materials in the carry-on items. The individual first detector is line-shaped and may include an array of subunits forming together the detector. In Fig. 3 such an array of subunits 15 is illustrated. The subunits are illustrated with a little free distance between the subunits for ease of illustration, but in reality the subunits form a continuous detector surface. On one embodiment the energy resolvability of the first detector is better than 3 percent of the energy level of the detected X-rays. In another embodiment the first detector is able to differentiate the photons in 128 different energy levels.

The 2D image data captured by the first detector are transmitted to the processing device 9 and stored and utilized in the reconstruction of the 3D representation and also used in characterization of the materials of the voxels in the model. The 3D representation allows to analyze the carry-on items and to identify the individual items that overlap one another in the projections captured as 2D image data. An accurate 3D representation can be based on in the range of from 3 to 30 projections, preferably from 3 to 20 projections of 2D image data. The 2D image data may typically have a resolution in the range of 1000 times 1000 pixels for a given volume. A similar resolution in 3D would hold 1000 times more voxels, and would traditionally involve 1000 projections of 2D image data. The 3D reconstruction based on up to 30 projections utilizes identification of the outer extent of the individual carry-on items. This can be based on the library of characteristic items, or surface reconstruction, or it can be based on images taken by 3D depth cameras before the group of carry-on items on the carrier enters the scanning volume, or the cameras can be mounted within the first stage module and photograph the group of carry-on items while they are X-ray scanned.

A further aid in the 3D reconstruction is to assume only positive attenuation in the materials, and thus no generation of X-rays in the material.

A further aid in the 3D reconstruction is to assume that the individual content item has constant properties without density gradients in the material.

A further aid in the 3D reconstruction is to analyze the individual projection of 2D image data to determine boundaries between areas of different materials composition. Such a segmentation of the 2D projections assists in the determination of the outer shapes of carry-on items and content items therein.

The voxels in the 3D representation are categorized as to the material. In this categorization two or three categories are used, namely known restricted materials, and known safe materials, and optionally the category unknown safe materials may also be used. The individual categorization is associated with an estimated value of accuracy. The value of accuracy may be 100 if the determination is absolute and without uncertainty, and the value of accuracy may be 0 if the determination is completely uncertain.

A pre-defined first threshold value may be used. If the accuracy value associated with a voxel categorized as a known restricted materials or known safe materials is below the first threshold value then it is decided that further analysis of the volume containing the voxel is required in order to resolve the uncertainty. On the other hand, if the estimated value of accuracy is above the first threshold value, then the category is accepted.

A pre-defined second threshold value may be used in connection with the unknown materials. The second threshold value is preferably higher than the first threshold value. The pre-defined first threshold value and/or the pre-defined second threshold value may be adjustable, so that if a temporary security problem arises, which requires a higher level of security, then the threshold values are adjusted accordingly. It may also be needed to adjust the values based on gathering of data during operation.

In case the analysis of the voxels results in that there are only known safe materials with the required accuracy in the determination, then the carrier with the group of carry-on items is shifted to release station 5 where the person or passenger can recollect the items and move on. However, if there is at least one voxel that requires further scanning then the carrier with the group of carry-on items is shifted to a second stage module 11 by a shifting device 13. In case the analysis results in that there is a known restricted material with the required accuracy in the determination, then the carrier with the group of carry-on items is directed to a keeping station 12 by the shifting device 13. In the keeping station security personnel may conduct an additional manual search and/or take appropriate action on the findings.

The second stage module has at least one X-ray source and at least one second detector. Because only a fraction of all the groups of carry-on items requires scanning in the second stage module, the scanning therein has more time at hand and can be more specific. The scanning in the second stage module may e.g. be a diffraction based or scattering based scanning. The scanning in the second stage module is only performed in a small volume coinciding with the voxel requiring further scanning.

The second detectors are operationally connected with a processing unit in the processing device 9, and based on the information obtained in the second stage scanning the processing device determines whether the material in the voxel is safe or restricted. If it is safe, then the carrier with the group of carry-on items is shifted to release station 5. If it is restricted, then the carrier with the group of carry-on items is shifted to keeping station 12. In the exceptional case that the category of the voxel still remains undecided, then the carrier with the carry-on items is shifted to a manual inspection station 14.

An embodiment of the second stage module 11 illustrated in Fig. 5 has at least one X-ray source 21 and at least one second detector 22. The scanning in the second stage module includes a diffraction scanning, and it can be an elastic scattering based scanning or an inelastic scattering. The scanning in the second stage module is only performed in a small volume coinciding with a local area 23 requiring further scanning, or in several such small volumes in case the group of carry-on items has more than one local area requiring further scanning.

The X-ray source 21 emits a polychromatic X-ray beam in a divergent shape 23, viewed as a fan-shape in Fig. 5, and a focusing device 24 focuses photons in the beam towards a measuring position 25. The focusing device emits a focused X-ray beam 26 to the measuring position 25.

The group of carry-on items enters the second stage module 11 and travels in direction of arrow A. The scanning in the second stage module is initiated in a manner, so that the group of carry-on items and X-ray source 21 and the focusing device 24 and second detector are mutually positioned so that measuring position 25 is in line with the local area 27 requiring further scanning.

In an embodiment the second detector and a first collimator 28 are fixed by stiffeners 29 to a platform 30, and the platform is movable in direction towards and away from the X-ray source as indicated by arrows B which is transverse to the transport direction A. A structure 31 carries X-ray source 21 and focusing device 24 and platform 30 so that they are movable in unison in the direction of height.

The second detector is positioned along a diffraction path 32, which is line-shaped and originates at measuring position 25 and forms an angle θ with the direct beam path of the focused X-ray beam 26. The angle θ can e.g. be 15°, however a small angle in the range of 2° to 7° is preferred, suitably in the range of 3° to 5° when the embodiment also comprises an third detector 33 located in the direct beam path of the focused X-ray beam 26. The third detector is optional, but can be applied to all embodiment of the second stage module. The third detector provides the advantage that the attenuation of the direct beam is detected, which attenuation is caused by passing through the various items in the group of carry-on items, and when the angle θ is small, then it is a suitable assumption that the diffracted signal has passed through similar materials, and the attenuations detected by the third detector can thus be applied to correct the detected diffraction signal for attenuation and obtain a more precise recording of the actual diffraction signal. In case the second detector and the third detector detect an energy spectrum, the energy spectrum acquired on the third detector from the direct beam can be used to correct the diffraction spectra detected by the second detector for energy dependent attenuation.

In an embodiment the third detector is associated with a second collimator 34. The second collimator is a pinhole collimator made of a material and dimensions providing strong attenuation of X-rays and having a central bore of typically a smaller diameter than the diameter of the focused X-ray beam 26 at the exit opening of the focusing device 24. In the case of a 1 mm beam diameter at the exit opening, the central bore may typically have a pinhole of a diameter of about 0.1 mm in diameter. By using a smaller pinhole, saturation of the third detector is avoided. The effect of the second collimator is to shield the third detector from X-rays other than those in the direct beam.

A second processing device 35 controls the positioning of one or more of X-ray source 21, the transporting mechanism in the second stage module, focusing device 24, first collimator 28, platform 30, third detector 33 and second collimator. The second processing device received data from processing device 9 associated with the first stage module. The data identify the local area 27 or the local areas 27 requiring further scanning, at least with respect to the position of the local area(s) within the group of carry-on items, and possibly also with further information detected in the first stage module, such as whether material in the local area 27 is of a solid material or of a fluid material, like a liquid, a gel or a gas, e.g. an aerosol. For a given volume at a local area requiring further scanning and a given scanning period, less diffraction signals can be expected when the material is of a fluid material than when it is of a solid material. The further information thus allows adaptation of the scanning in the second module to one or the other type, and to save time and only spend the period actually required for the scanning. One adaptation is to increase the width of the focused X-ray beam 26 when the volume contains a liquid.

The second processing device 35 is connected with the processing device 9 via a first signal line 36, and via one or more second signal lines 37 to one or more actuators 38 for adjusting the positions of the above-mentioned parts in the individual set of equipment in the second stage module. Via one or more third signal lines 39 the second processing device 35 receives data from the second detector and possibly also from the third detector. Processing device 9 and second processing device 35 can be integrated into a single device or can be divided into more processing devices, as is most convenient in the embodiment at hand.

The first collimator 28 is made of a material and dimensions providing strong attenuation of X-rays and has a passage allowing free passing of diffraction path 32. The passage can be part circular-shaped where the radius of the circle corresponds to the distance from the passage to the direct path of the focused X-ray beam 26 or it can be a pinhole or a path of square cross-section or of another shape. The passage is preferably of rectangular shape in order to achieve a short intersection between the central beam and the diffracted beam, and for small diffraction angles, a rectangular shape of e.g. 1 mm x 3 mm can be suitable. The effect of the second collimator is to shield the second detector from X-rays other than those occurring in the selected diffraction path. This shielding improves the signal-to-noise ratio and thus allows more precise detection in shorter time.

The focusing device 24 can in one embodiment comprise a set of mirrors that capture the divergent polychromatic beam from X-ray source 21 and focus the beam into X-ray beam 26. In another embodiment the focusing device 24 comprises a tube-shaped member having a wall of tubular shape and a central passage. The shape of the wall is of elliptical shape in cross-section with the one focus point located at X-ray source 21 and another focus point located at the measuring position 25. Photons exit the tube-shaped member as a focused X-ray beam directed towards measuring position 25. In another embodiment the tube-shaped member has a wall of parabolic shape in cross-section with a focus point located at X-ray source 21. Photons in the divergent shape 23 of the beam at the exit opening of X-ray source 21 are received in the tube-shaped member and focused into a parallel focused X-ray beam 26 directed towards measuring position 25.

A carrier in form of a cart 16 is illustrated in Fig. 4, and the carrier carries a group 4 of carry-on items. In the illustrated example the group is composed of a briefcase 17, a computer case 18, a shopping bag 19, and a coat 20.

The first detectors 7 in the first stage module may have a length of at least 100 cm, and a length of 130 cm or 150 cm will be suitable in many embodiments. It is, however, also possible to use first detectors 7 of shorter length than 100 cm, such as a length of 90 cm.

Details from the above-mentioned embodiments and examples may be combined into other embodiments and examples within the scope of the patent claims.

## Claims

1. A method of security scanning of carry-on items, comprising at least the following steps
a) receiving carry-on items,
b) scanning the carry-on items in a first stage module using at least one X-ray source and first detectors to conduct transmission contrast radiography generating projections of two-dimensional image data of the carry-on items,
c) reconstructing a three-dimensional representation of the carry-on items,
d) analyzing the three-dimensional representation to determine whether further scanning is required,
e) carry-on items determined in step d) to require further scanning are scanned in a second stage module using at least one X-ray source and at least one second detector, wherein
the carry-on items in step a) are received as a group of carry-on items on a carrier and are scanned simultaneously as a group in step b), and
at least three of the first detectors used in step b) to conduct transmission contrast radiography are line-shaped and provide at least dual energy resolution, wherein said at least three of the first detectors detect at least three projections of two-dimensional image data and have mutually different orientations.

2. A method of security scanning of carry-on items according to claim 1, wherein the at least one X-ray source and first detectors are stationary during scanning in step b).

3. A method of security scanning of carry-on items according to claim 1 or 2, wherein the scanning in step b) generates from 3 to 30 projections of two-dimensional image data of the carry-on items.

4. A method of security scanning of carry-on items according to claim 3, wherein reconstruction of the three-dimensional representation in step c) uses external information in addition to the two-dimensional image data from the at least 3 projections of the carry-on items.

5. A method of security scanning of carry-on items according to claim 4, wherein the external information is selected as one or more from a group comprising i-a) information on the outer shape of carry-on items in the group of carry-on items; i-b) real materials provide positive attenuation and no generation of X-rays in the material; i-c) an individual object in a carry-on item, or the carry-on item itself, has the same density; i-d) segmentation of the projections of two-dimensional image data provide information on boundaries between areas of different materials.

6. A method of security scanning of carry-on items according to one or more of claims 1 to 5, wherein the analyzing in step d) involves categorization of voxels in the three-dimensional representation into one of known restricted materials, known safe materials, or unknown materials, and wherein said categorization of voxels is associated with an estimate of accuracy.

7. A method of security scanning of carry-on items according to claim 6, wherein step d) determines that further scanning is required if an estimate of accuracy for a voxel categorized as a known restricted materials or known safe materials is below a first pre-defined threshold.

8. A method of security scanning of carry-on items according to claim 7, wherein step d) determines that further scanning is required if an estimate of accuracy for a voxel categorized as unknown materials is below a second pre-defined threshold, the second pre-defined threshold being higher than the first pre-defined threshold.

9. A method of security scanning of carry-on items according to one or more of claims 1 to 8, wherein the groups of carry-on items determined in step d) to require further scanning are in average over a week of operation at the most 20 percent of all groups of carry-on items scanned during the week, and preferably at the most 10 percent of all groups of carry-on items scanned during the week.

10. A method of security scanning of carry-on items according to one or more of claims 1 to 8, wherein the carrier of the individual group of carry-on items is a cart used by a person to transport the person's personal group of carry-on items.

11. A method of security scanning of carry-on items according to one or more of claims 1 to 10, wherein the group of carry-on items on the carrier may include content items holding liquid amounts in the range of 130 ml to 3000 ml.

12. A security scanning system of carry-on items, comprising an inlet station for carry-on items, a first stage module having at least one X-ray source and first detectors for conducting transmission contrast radiography generating projections of two-dimensional image data of the carry-on items, at least one processing unit operationally connected to said first detectors, said at least one processing unit being configured to reconstruct a three-dimensional representation of the carry-on items and to analyze the three-dimensional representation to determine whether further scanning is required, a second stage module having at least one X-ray source and at least one second detector for scanning the carry-on items requiring further scanning, wherein the inlet station for the carry-on items is configured to receive a group of carry-on items on a carrier, and the first stage module is configured to simultaneously scan the group of carry-on items on the carrier, and wherein at least three first detectors in the first stage module are line-shaped and arranged in mutually different orientations and have at least dual energy resolution.

13. A security scanning system of carry-on items according to claim 12, wherein the first detectors in the first stage module are line-shaped detectors of a length of at least 1 metre.

14. A security scanning system of carry-on items according to claim 12 or 13, wherein the first stage module has in the range of from 3 to 30 line-shaped detectors arranged in at least three different directions.

15. A security scanning system of carry-on items according to one or more of claims 12 to 14, wherein the carrier is a cart for use by a person to transport the person's personal group of carry-on items.
